# EUROPÄISCHE PATENTSCHRIFT

(11) **EP 0 688 808 B1**
(45) Veröffentlichungstag und Bekanntmachung des Hinweises auf die Patenterteilung: **22.12.1999**
(21) Anmeldenummer: 95108832.7
(22) Anmeldetag: 08.06.1995
(51) Int. Cl.: C08G 69/16

(54) **Verfahren zur Herstellung von hochmolekularem Polyamid 6**
Process for preparing high molecular weight polyamide 6
Procédé pour la préparation de polyamide-6 à haut poids moléculaire

(30) Priorität: 21.06.1994 DE 4421704
(43) Veröffentlichungstag der Anmeldung: 27.12.1995
(73) Patentinhaber: BAYER AG, 51368 Leverkusen (DE)
(72) Erfinder: Nielinger, Werner, Dr., D-47802 Krefeld (DE); Gittinger, Andreas, Dr., D-47800 Krefeld (DE); Ostlinning, Edgar, Dr., D-40237 Düsseldorf (DE); Idel, Karsten-Josef, Dr., D-47802 Krefeld (DE); Sschulte, Helmut, D-47803 Krefeld (DE)

(56) Entgegenhaltungen:
- EP-A- 0 288 894
- EP-A- 0 360 062
- EP-A- 0 405 239
- EP-A- 0 462 476
- DE-A- 1 595 253

## Beschreibung

Die Herstellung betrifft ein Verfahren zur Herstellung von hochmolekularem Polyamid 6 (Polycaprolactam).

Polyamide werden wegen ihrer hervorragenden Eigenschaften, zu nennen sind hier die hohe Festigkeit und Zähigkeit sowie die gute Beständigkeit gegen Chemikalien, zur Herstellung von Behältern mannigfacher Art verwendet. So werden beispielsweise Heizöltanks oder Benzintanks für Kraftfahrzeuge durch anionische Polymerisation von Caprolactam hergestellt. Dieses Verfahren ist für großvolumige Behälter besonders geeignet und wirtschaftlich.

Kleinere Behälter, wie Flaschen und Kanister, lassen sich nach dem Blasextrusionsverfahren herstellen. Dazu sind Polyamide mit hoher Schmelzviskosität erforderlich, um die notwendige Stabilität des Schmelzeschlauches während der Extrusion zu gewährleisten. Die Größe der nach diesem Verfahren herstellbaren Behälter ist also durch die Schmelzviskosität bzw. das Molekulargewicht des Polyamids begrenzt.

Mit einem extrem hochmolekularen Polycaprolactam ist es also möglich, auch größere Behälter und Tanks durch Blasextrusion herzustellen.

Hochviskose Polyamide für die Extrusion werden in der Regel hergestellt, indem man niedrigviskose Standardware, die keinen Molekulargewichtsregler enthält, in der festen Phase nachkondensiert. Die dabei erreichten Molekulargewichte der Produkte sind häufig etwas schwankend und reichen nur zur Herstellung von Behältern kleiner oder mittlere Größe aus.

EP-A-04 62 476 beschreibt ein Verfahren zur Herstellung von Polycaprolactam mit einer rel. Viskosität von 2.7 (in 96 % Schwefelsäure) mit geregelten Aminoendgruppengehalt, in welchem man Caprolactam in Gegenwart von Wasser als Initiator und unter Mitverwendung von Dicarbonsäuren als Kettenregler polymerisiert.

EP-A-02 88 894, EP-A-03 60 062 und EP-A-04-05 239 beschreiben Verfahren zur Herstellung von (Co)polyamiden auf Basis von Lactamen, wobei bei den gegebenen Produkten die relativen Viskositäten im Bereich 2.9-4.4 (in 1 % m-Kresol; rel. Viskositäten zwischen 96 % Schwefelsäure und 1 % m-Kresol unterscheiden sich max. um 0.3) liegen.

Es wurde nun gefunden, daß man ein Polycaprolactam mit deutlich höherem Molekulargewicht dann erhält, wenn man ein niedermolekulares Polyamid nachkondensiert, das unter Zusatz von wenig Polycarbonsäure hergestellt wurde. Dieses Ergebnis ist überraschend, da der Zusatz von carboxylgruppenhaltigen Verbindungen bei der Polymerisation von Caprolactam eine Erniedrigung des Molekulargewichts bewirkt.

Gegenstand der Erfindung ist ein Verfahren zur Herstellung von hochmolekularem Polyamid 6 mit einer relativen Viskosität > 5,5 durch hydrolytische Polymerisation von Caprolactam und Nachkondensation des Vorproduktes in der festen Phase, dadurch gekennzeichnet, daß man die hydrolytische Polymerisation unter Zusatz einer Carbonsäure mit mindestens zwei Carboxylgruppen durchführt.

Die erfindungsgemäß hergestellten Polyamide eignen sich besonders zur Herstellung von Formkörpern (Gegenständen) nach dem Blasextrusionsverfahren.

Die hydrolytische Polymerisation des Caprolactams erfolgt diskontinuierlich oder kontinuierlich nach den bekannten Verfahren, bevorzugt kontinuierlich in einem VK-Rohr.

Zur Herstellung des Polyamid 6 (Polycaprolactam) kann als Caprolactam auch eine beliebige Mischung aus Caprolactam und ω-Alnino-capronsäure eingesetzt werden, also 0 bis 100 Gew.-% Caprolactam und 0 bis 100 Gew.-% ω-Amino-capronsäure.

Als Carbonsäuren mit mindestens zwei Carboxylgruppen sind aliphatische, cycloaliphatische und aromatische di- und polyfunktionelle Carbonsäuren geeignet. Beispiele sind Adipinsäure, Azelainsäure, Sebazinsäure, Decandicarbonsäure, Cyclohexandicarbonsäure, Terephthalsäure, Isophthalsäure, Trimesinsäure. Bevorzugt sind Di- und Tricarbonsäuren, insbesondere Adipinsäure, Sebazinsäure und Terephthalsäure. Die Polycarbonsäuren werden in solchen Mengen eingesetzt, daß der Anteil der Carboxylgruppen 0,0004 bis 0,00005, vorzugsweise 0,0003 bis 0,0001 Mol Carboxylgruppen, bezogen auf 100 g Polycaprolactam, beträgt.

Bei der Durchführung des Verfahrens wird in einer ersten Stufe aus Caprolactam/ω-Aminocapronsäure unter Zusatz der Carbonsäure mit mindestens zwei Carboxylgruppen bei einer Temperatur oberhalb des Schmelzpunktes von Polyamid 6 ein Polyamid 6 hergestellt, das eine relative Viskosität von 2 bis 4 (25°C, Ubbelohde-Viskosimeter, 1 Gew.-% in m-Kresol) hat. Dieses wird wie üblich aufgearbeitet und granuliert.

Das so erhaltene Granulat wird dann für einen Zeitruam von 5 bis 70 Stunden unter Inertgas (z.B. Stickstoff) auf einer Temperatur von 160 bis 200°C, vorzugsweise 170 bis 190°C gehalten.

Bei dieser Nachkondensation wird die relative Viskosität auf mindestens 5,5 (25°C, Ubbelohde-Viskosimeter, 1 Gew.-% in m-Kresol) erhöht.

Die erfindungsgemäß hergestellten Polyamide können die bekannten Hilfsmittel und Zusätze enthalten wie Verarbeitungshilfsmittel, Nukleierungsmittel, Stabilisatoren, Farbstoffe und Pigmente, ferner Füllstoffe und Verstärkungsmittel.

In der Regel werden die Hilfsmittel vor der Verarbeitung des Polyamids mit dem Granulat, gegebenenfalls in Form eines Konzentrats, gemischt. Additive, die die Nachkondensation nicht beeinflussen, können auch in das niedermolekulare Polycaprolactam eincompoundiert werden. Für die Einarbeitung von Füllstoffen und Verstärkungsmitteln, wie Glasfasern, ist dies das bevorzugte Verfahren.

Die erfindungsgemäß hergestellten Polyamide dienen bevorzugt zur Herstellung von Behältern und Tanks nach dem Extrusionsblas- oder Coextrusionsblasverfahren. Selbstverständlich kann es auch zur Herstellung anderer Formkörper wie Profile, Leisten, Rohre, Schienen durch Extrusion verwendet werden.

### Beispiele

Man polymerisiert eine Mischung aus 91 g Caprolactam und 10,43 g Aminocapronsäure unter Zusatz von wechselnden Mengen Azelainsäure. Die Polymerisation erfolgt unter Rühren in einer Stickstoffatmosphäre eine Stunde bei 200°C und 5 Stunden bei 250°C. Nach der Extraktion mit Wasser wird das Polyamidgranulat 24 Stunden mit 180°C warmem Stickstoff nachkondensiert.

Die relativen Viskositäten des Ausgangsproduktes und des nachkondensierten Polyamids, gemessen an einer einprozentigen Lösung des Polyamids in m-Kresol bei 25°C ist einem Ubbelohde-Viskosimeter, sind in der folgenden Tabelle zusammengestellt.

| **Relative Viskosität** | | |
|---|---|---|
| **Dicarbonsäure** [Mol COOH/100 g) | **Ausgangsprodukt** | **Nachkondensiertes Produkt** |
| - | 3,4 | 5,2 |
| 0,0001 | 3,6 | 5,7 |
| 0,00005 | 3,7 | 5,65 |
| 0,00027 | 3,5 | 5,7 |
| Vergleich 0,0005 | 3,5 | 5,4 |

## Patentansprüche

1. Verfahren zur Herstellung von hochmolekularem Polyamid 6 mit einer relativen Viskosität > 5,5 (gemessen an einer einprozentigen Lösung des Polyamids in m-Cresol bei 25°C) durch hydrolytische Polymerisation von Caprolactam und Nachkondensation der Vorprodukte in der festen Phase, dadurch gekennzeichnet, daß man die hydrolytische Polymerisation unter Zusatz einer Carbonsäure von mindestens zwei Carboxylgruppen in Mengen von 0,0004 bis 0,00005 mol Carboxylgruppen/100 g Caprolactam durchführt.

2. Verfahren zur Herstellung von hochmolekularem Polycaprolactam nach Anspruch 1, dadurch gekennzeichnet, daß man als Polycarbonsäure eine Dicarbonsäure verwendet.

3. Verfahren zur Herstellung von hochmolekularem Polycaprolactam nach Anspruch 1, dadurch gekennzeichnet, daß man als Polycarbonsäure eine Tricarbonsäure verwendet.

4. Verwendung der hochmolekularen Polyamide für die Herstellung von Formkörpern durch Extrusion und Coextrusionsverfahren.

## Claims

1. A process for the production of high molecular weight polyamide 6 having a relative viscosity of > 5.5 (measured on a one per cent solution of the polyamide in m-cresol at 25°C) by hydrolytic polymerisation of caprolactam and post-condensation of the intermediate products in the solid phase, characterised in that the hydrolytic polymerisation is carried out with addition of a carboxylic acid having at least two carboxyl groups, in quantities of 0.0004 to 0.00005 mol carboxyl groups/100 g caprolactam.

2. A process for the production of high molecular weight polycaprolactam according to claim 1, characterised in that a dicarboxylic acid is used as the polycarboxylic acid.

3. A process for the production of high molecular weight polycaprolactam according to claim 1, characterised in that a tricarboxylic acid is used as the polycarboxylic acid.

4. The use of the high molecular weight polyamides for the production of mouldings by extrusion and coextrusion processes.

## Revendications

1. Procédé pour la préparation d'un polyamide 6 à haut poids moléculaire, avec une viscosité relative supérieure à 5,5 (mesuré sur une solution à 1 % du polyamide dans le m-crésol à 25°C) par polymérisation hydrolytique du caprolactame et condensation complémentaire des produits intermédiaires en phase solide, caractérisé en ce que la polymérisation hydrolytique est réalisée avec adjonction d'un acide carboxylique à au moins deux groupes carboxyle en quantité de 0,0004 à 0.00005 mol de groupes carboxyle pour 100 g de caprolactame.

2. Procédé de préparation d'un polycaprolactame à haut poids moléculaire selon revendication 1, caractérisé en ce que l'acide polycarboxylique utilisé est un acide dicarboxylique.

3. Procédé de préparation d'un polycaprolactame à haut poids moléculaire selon revendication 1, caractérisé en ce que l'acide polycarboxylique utilisé est un acide tricarboxylique.

4. Utilisation d'une polyamide à haut poids moléculaire pour la fabrication de corps moulés par les techniques d'extrusion et de co-extrusion.
